Europäisches Patentamt

European Patent Office

Office européen des brevets

(11) Publication number: **0 288 231 B1**

# EUROPEAN PATENT SPECIFICATION

(45) Date of publication of patent specification: **02.12.92** (51) Int. Cl.5: **G02B 6/28**

(21) Application number: **88303476.1**

(22) Date of filing: **18.04.88**

(54) **Optical coupler and process for preparation thereof.**

(30) Priority: **20.04.87 JP 58731/87 U**

(43) Date of publication of application:
**26.10.88 Bulletin 88/43**

(45) Publication of the grant of the patent:
**02.12.92 Bulletin 92/49**

(84) Designated Contracting States:
**CH DE FR GB IT LI NL**

(56) References cited:
**EP-A- 0 051 727**
**DE-A- 3 323 726**
**FR-A- 2 401 435**

**PATENT ABSTRACTS OF JAPAN, vol. 8, no.
278 (P-322)[1715], 19th December 1984; & JP
- A - 59 143 119**

(73) Proprietor: **MITSUBISHI RAYON CO., LTD.**
**3-19, Kyobashi 2-chome Chuo-Ku**
**Tokyo 104(JP)**

(72) Inventor: **Okada, Hiroshi**
**17-15, Kyodo 5-chome Setagaya-ku**
**Tokyo(JP)**
Inventor: **Toda, Masatoshi**
**12-8, Kyodo 5-chome Setagaya-ku**
**Tokyo(JP)**
Inventor: **Suzuki, Shingo**
**23-39, Sagamigaoka 4-chome**
**Zama-shi Kanagawa(JP)**
Inventor: **Kagami, Manabu**
**755, Noborito, Tama-Ku**
**Kawasaki-shi, Kanagawa(JP)**
Inventor: **Komiya Masayoshi**
**17-17 Kyodo 5-chome**
**Setagaya-Ku, Tokyo(JP)**

(74) Representative: **West, Alan Harry et al**
**R.G.C. Jenkins & Co. 26 Caxton Street**
**London SW1H 0RJ(GB)**

## Description

The present invention relates to an optical coupler comprising a plurality of optical fibers and which is particularly applicable to the branching or transmitting of optical signals to a plurality of points in an optical network.

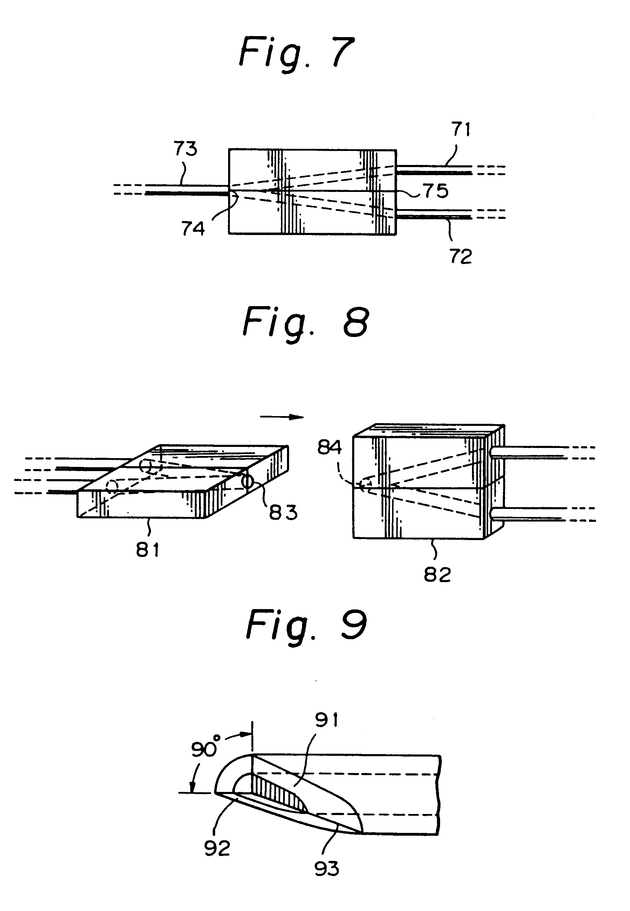

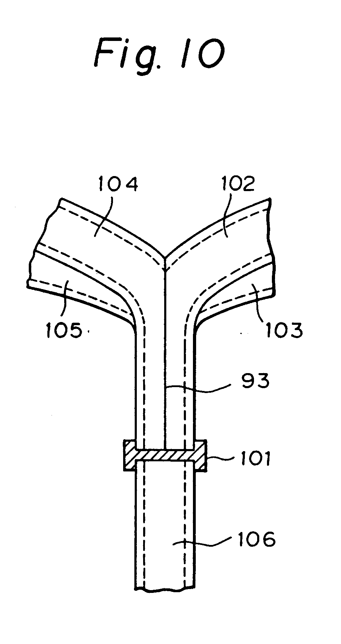

Optical couplers for branching optical signals from an optical signal generator to a plurality of receivers through optical fibers, and for coupling optical signals from separate transmitters in an optical network, have already been developed. For example, Japanese Unexamined Patent Publication No. 53-6049 describes an optical coupler comprising a light-transmitting optical fiber and a plurality of branching core-clad optical fibers connected to it to effect branching or coupling of optical signals. As shown in Fig. 9 of the accompanying drawings, illustrating a light-branching coupler of this type, each of N, for example, four, branching optical fibers is processed so that its branching-coupling end has two plane surfaces 91 and 92 at an angle of 360°/N (N = 4, angle is 90°) and as shown in Fig. 10, the intersections 93 of the two planes of all of the optical fibers 102, 103, 104, and 105 are superimposed to form an integrated end. The end of a light-transmitting optical fiber 106 is connected to this integrated end through a sleeve 101 to effect branching-coupling of optical signals.

Since the branching-coupling end of each branching optical fiber used in a coupler of this type has an end comprising two planes 91 and 92 at an angle of 360°/N (N being for example, 4), such an optical fiber is prepared by appropriate cutting and polishing of the end. However, precision is difficult to achieve and large deviation from the correct angle may result. Accordingly, it is almost impossible to attain efficient light branching-coupling and optical couplers of this type are unsatisfactory from the practical view-point.

Moreover, since N end face-processed optical fibers 102, 103, 104, and 105 are connected to one optical fiber 106 through the sleeve 101, the mechanical strength of the connection may be weak making light branching-coupling even more unsatisfactory.

An optical conductor junction is described in FR-A-2 401 435 in which the circular end face of a first light filament abuts the end faces of a number of branching light filaments, the latter having been ground and polished so as collectively to present the required circular end face. The individual filaments are held in suitable housing blocks and the assembly is adhesively bonded together. A similar arrangement is described in DE-A-3 323 726, a Y junction being formed by bringing together the polished faces of the optical conductors which are mounted in their respective blocks. However, neither of these structures seems to offer a complete solution to the problems associated with the optical coupler of JA-A-53-6049.

The present invention seeks to provide an optical coupler which can be assembled by a simple operation to achieve highly efficient light branching-coupling.

According to a first aspect of the invention, there is now provided an optical coupler including a plurality of optical fibers adjoining one another at one end of the coupler and forming separate branches at the other end of the coupler, the coupler comprising a plurality N of coupler parts each coupler part adjoining the other coupler part(s) by way of an abutting face or a pair of abutting faces positioned about a longitudinal axis perpendicular to the one end of the coupler and each pair of abutting faces meeting at an angle of 360°/N at that axis, each coupler part being constituted by a block and an associated optical fiber inserted in an inclined optical fiber-retaining hole in the block, one end of the hole emerging with chamfered edges at the edge or corner of the block formed by the one end and the adjacent abutting face or faces of the coupler part, the fiber being plastically deformed by heat treatment its end to be flush with the surfaces of the block adjacent the hole and to extend into the chamfer to retain the fiber in the block.

According to a second aspect of the invention, there is provided also a process for the preparation of such an optical coupler the process comprising inserting an optical fiber into the inclined optical fiber-retaining hole of a block so that an end of the optical fiber projects slightly from the end of the hole having chamfered edges, heat-treating the projecting end of the optical fiber with a heated plate to plastically deform the projecting end of the fiber to be flush with the surfaces of the block adjacent the hole and into the chamfer to retain the optical fiber in the block, and assembling a plurality N of such blocks to construct the optical coupler.

According to a further aspect of the invention, there is provided apparatus for use in the preparation of such an optical coupler, the apparatus comprising a holder for the block, a mirror-surface plate for heat treating the end of the optical fiber projecting slightly from the hole in the block and a heater for heating the mirror-surface plate, the heater, mirror-surface plate and block holder being arranged in sequence on a base for relative sliding movement.

Other aspects of the invention and its various preferred features are described below.

The present invention will now be described in greater detail by way of example only with reference to the accompanying drawings, in which:

Fig. 1(a) is a perspective view of a block constituting a 2:1 optical coupler according to the present invention;

Fig. 1(b) is a perspective view of a optical coupler constructed using the block shown in Fig. 1(a);

Fig. 2 is a perspective view of a 4:1 optical coupler according to the invention;

Fig. 3 is a perspective view of a heating apparatus for treating the end face of an optical fiber projecting from the rectangular end portion of the block;

Fig. 4 is a series of side views of the treatment procedure using the apparatus shown in Fig. 3;

Fig. 5 is a sectional view of the block illustrating the situations before and after heat treatment;

Fig. 6 is an exploded view of a light emitting device and photodetector integrated optical coupler;

Fig. 7 is a top view of an optical coupler of the pig tail type;

Fig. 8 is a view of a a star coupler comprising two optical couplers; and,

Figs. 9 and 10 are views illustrating a conventional optical coupler.

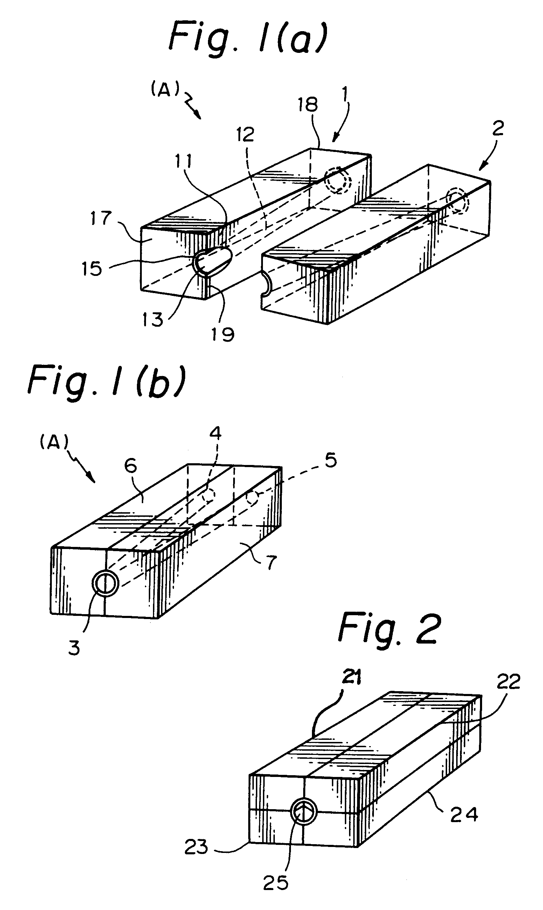

Referring to the drawings, Fig. 1(b) is a perspective view of an optical coupler (A) having a light branching-coupling ratio of 2:1 and comprising two light-branching optical fibers, and Fig. 1(a) is a perspective view of two optical coupler blocks 1 and 2 constituting coupler (A). Figs. 1(a) and 1(b) illustrate an embodiment in which the blocks 1 and 2 have the same trapezoidal shapes.

As shown in Fig. 1(a), the block 1 has an abutting face 11 to be bonded to the other block 2 having a symmetrical structure, and an end face 17 adjacent and perpendicular to the abutting face 11. A retention hole 12 is pierced through the interior of the block 1 from the edge 19 defined by the faces 11 and 17 at an inclination of about 3 to about 30°, especially about 10°, to the face 11. The hole 12 extends to the other end face 18 of the block 1. A chamfer 15 is formed around the end 13 of the hole 12.

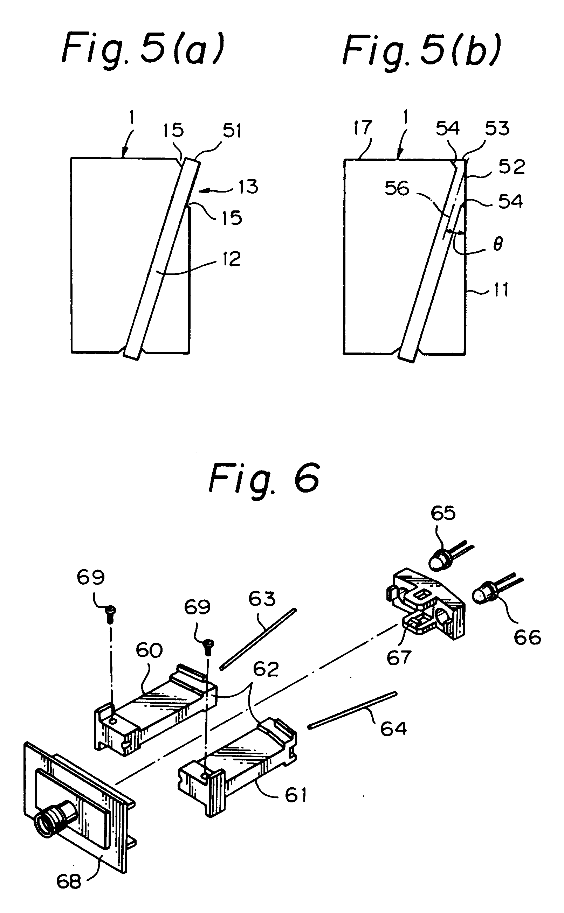

When an optical coupler is to be constructed using the block 1, an optical fiber is inserted into the hole 12 so that an end 51 of the optical fiber projects from the end 13 of the hole 12 (as shown in Fig. 5(a)) and the projecting end 51 is heat-treated by a heating apparatus described below. This heat treatment causes plastic deformation of the projecting end 51 of the optical fiber as shown in Fig. 5(b) to form a plane surface 52 at an angle $\theta$ to the longitudinal axis 56 of the fiber in the plane of face 11 and a plane surface 53 in the plane of face 17, and excess material of the optical fiber is accommodated in chamfers 54 and 55. In this way, there are constructed optical coupler parts 6 and 7 shown in Fig. 1(b) including optical fibers with end faces 52 and 53 in the planes of the faces 11 and 17. When the parts 6 and 7 are brought together and integrated, an optical coupler (A) is formed having an optical fiber-connecting end 3 and optical fiber branch ends 4 and 5.

The coupler blocks are preferably formed of a material having good processability for manufacturing the block and showing good heat resistance during formation of the light branching-coupling part by heat treatment. Suitable materials in this respect are, for example, metals such as brass, and resins, for example fiber-reinforced plastics materials such as polybutylene terephthalate and polyethylene terephthalate reinforced with glass fibers or carbon fibers. As stated above, the angle of the hole 12 to the face 11 of the block is preferably about 3 to about 30°. In order to optimise the light branching-coupling characteristics of the optical coupler of the invention, it is especially preferred that this inclination angle is about 10° or less. The number of blocks constituting the optical coupler of the invention is not limited to the two shown in the embodiment of Fig. 1 but may be varied according to needs. For example, an optical coupler having a light branching-coupling ratio of 4:1, as shown in Fig. 2, has four such blocks. Referring to Fig. 2, four blocks 21, 22, 23 and 24 are arranged to construct an optical coupler of the present invention, reference numeral 25 representing the optical fiber-connecting end of the coupler. The guide hole of the block may be formed so that not only an optical fiber but also an optical fiber cable may be inserted in the guide hole.

The heating apparatus for fabricating the branching-coupling parts of optical couplers of the present invention will now be described.

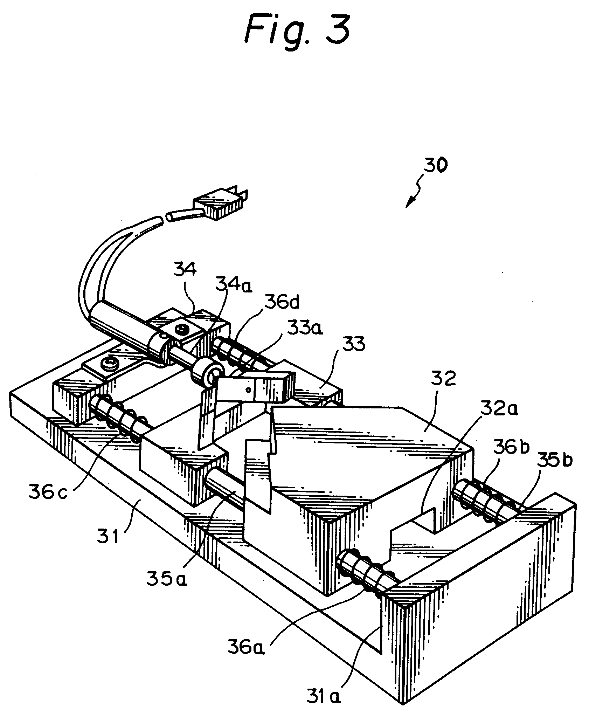

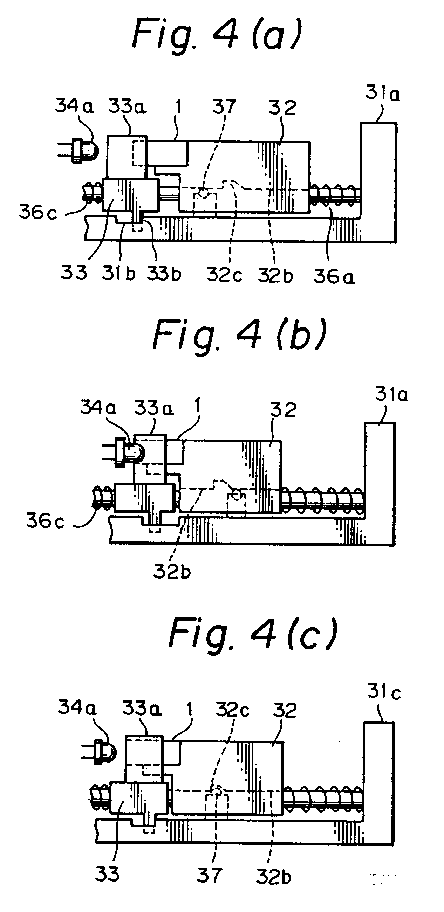

Fig. 3 is a perspective view of this heating apparatus, and Fig. 4 is a series of side views illustrating the procedures involved in its use.

In the heating apparatus 30 shown in Figs. 3 and 4, a base 31 includes in sequence along its length a stop 31a on one end, a block-holder 32 for holding the block 1 having the optical fiber inserted in it, a plate-holder 33 for holding a mirror-surface plate 33a of substantially rectangular shape, and a heater stand 34 for holding and fixing a heater 34a having a rectangular heater surface. The positional relationship of the block 1, mirror surface plate 33a, and heater 34a in their respective holders is such that the optical fiber-connecting end 3 of the block 1 including an optical fiber abuts a corner portion of the mirror-surface of the plate 33a and the heater 34a abuts the back surface of the plate 33a. The shapes of the plate 33a and heater 34a are the same as that of the square edge 19 of the block 1, so that the end 13 of the block 1, the plate 33a and the heater 34a can be held in intimate contact. The block holder 32 and plate holder 33 are mounted for sliding movement on a pair of longitudinal metal rods 35a and 35b fastened along each side of the base 31 between the stop 31a and the heater stand 34. The block holder 32 and plate holder 33 can be moved along the rods 35a and 35b, towards the heater stand 34 or the stop 31a, to bring the block 1 into contact with the mirror-surface plate 33a and heater 34a or to release the block 1.

Tension springs 36a and 36b are attached to the block holder 32 and the stop 31a and supported on the rods 35a and 35b to prevent unintentional contact between the block holder 32 and the plate holder 33. Compression springs 36c and 36d are similarly supported on the rods 35a and 35b between the heater stand 34 and the plate holder 33 to prevent the plate 33a being maintained in contact with the heater 34a unintentionally.

The plate holder 33 includes a lug 33b which is accommodated in a groove 31b formed in the base 31 to limit the movement of the plate holder 33 along the rods 35a and 35b. Also, the block holder 32 has a slot 32a formed in its underside, the roof 32b of the slot 32a including a recess 32c which can locate on a plunger 37 attached the base 31 (see Fig. 4(a)).

The heating apparatus 30 is operated as described below with reference to Figs. 4(a), 4(b) and 4(c) of the drawings. The mirror-surface plate 33a located in plate holder 33 is first moved towards the heater 34a and the back surface of the plate 33a is brought into contact with the heater 34a to heat the plate. The block holder 32 is then moved back towards the stop 31a and the block 1 with an optical fiber properly located in it is positioned on the block holder. The plate holder 33 and the mirror-surface plate 33a warmed by the heater 34a are drawn back from the heater and the system then has the disposition shown in Fig. 4(a). In this disposition, the plunger 37 bears against the underside of the slot 32a and the lug 33b is at the rear end of the groove 31b.

The block holder 32 and block 1 are then moved forward so that the block contacts the mirror-surface plate 33a and the assembly of block holder 32 and block 1 together with plate holder 33 and plate 33a is moved forward against the actions of the springs 36a, 36b, 36c and 36d into contact with the heater 34a, to the positions shown in Fig. 4(b).

In this position, the end of the optical fiber projecting from the block 1 is plastically deformed and the optical fiber is engaged with the block 1.

The assembly of the plate-holder 33, plate 33a, block 1, and the block holder 32 is then allowed to move back under the force of the springs until and the recess 32c is again engaged by the plunger 37 and in this stationary state shown in Fig. 4(c), the plate 33a is allowed to cool in contact with the block 1. After the plate 33a has been cooled, the block-holder 32 and the block 1 are moved back towards the stop 31a and the block 1 is separated from the plate 33a and can then be removed from the holder 32.

The plate 33a is preferably of a material on which a good mirror surface can be formed and which has a relatively good heat conductivity. Stainless steel is preferably used. When a plastics optical fiber, for example, "Eska SK-40" (registered Trade Mark) supplied by Mitsubishi Rayon, is treated in the manner described above, the temperature of the mirror-surface plate is preferably about 140°C or more.

The apparatus shown in Fig. 3 may be used in those instances where two coupler blocks are used, as shown in Fig. 1. However, when the optical coupler is constructed using three or four blocks for example, a block 1 and a mirror-surface plate both of a shape including two planes at an angle of 360°/N are necessarily used.

Referring again to Fig. 5, the procedures involved in the heat treatment carried out in the heating apparatus can now be described.

First, an optical fiber 51 is inserted into the hole 12 in the block 1 so that the end of the optical fiber projects slightly from the end of the hole. After being subjected to heat treatment, as shown in Fig. 5(b), the end of the optical fiber is plastically deformed into a light branching-coupling plane 52 in the plane of the abutting face 11 of the block 1, and a top end plane 53 in the plane of the end face 17 of the block 1. Additionally part of the optical fiber is filled in the chamfer 15 to form an engaging portion 54. In this way, the shape of the light branching-coupling end face of the optical fiber is formed more precisely than in conventional techniques. Furthermore, the optical coupler of the invention is assembled by abutting the faces of the required number of blocks and its mechanical strength is therefore high and its light branching-coupling stability is greatly improved. Also, it is not necessary separately to prepare a jig for the processing of the end face and the block itself can be employed as a jig for the processing of the end face to simplify the preparation of the optical coupler.

A light emitting device and a photodetector may be arranged integrally with the end faces of the optical fibers on the branching side of an optical coupler of the invention. Figure 6 is an exploded view illustrating an example of such an optical coupler having integrated light-emitting and light-receiving elements. Referring to Fig. 6, a 2:1 optical coupler is assembled by engaging abutting faces 62 of blocks 60 and 61. Reference numerals 63 and 64 represent light branching-coupling pathforming optical fibers, reference numerals 65 and 66 represent a light emitting device and a photodetector, respectively, reference 67 represents a holder for engaging the blocks 60 and 61 together and for fixing the light-emitting and light-receiving elements 65 and 66 to the end faces of the optical fibers arranged in the blocks, reference numeral 68 represents a flange portion for engaging the blocks 60 and 61 tightly together and for engaging an optical fiber having a plug or the like with the optical fiber-connecting end of the optical coupler, which has a screw for dismountably fixing the plug of the optical fiber, and reference numeral 69 represents screws for engaging the flange portion 68 with the blocks 60 and 61.

Figure 7 shows an optical coupler of the pig tail type according to another embodiment of the present invention. In this optical coupler, the optical fiber inserted in the retention hole of the optical coupler part is not cut but retained on the branching side end. In Fig. 7, reference numerals 71, 72 and 73 represent optical fibers, reference numeral 74 represents an optical fiber-connecting end, and reference numeral 75 represents a branching side.

The optical fiber for transmission of light which is connected to the optical fiber-connecting end of the optical coupler, may be either a fixed type or a dismountable type, as shown in Fig. 6 or 7.

A star coupler can be constructed by using a plurality of optical couplers of the present invention and connecting together the optical fiber-connecting ends of these optical couplers. An example thereof is shown in Fig. 8. In Fig. 8, reference numerals 81 and 82 represent optical couplers, and a 2:2 star coupler is constructed by engaging optical fiber-connecting ends 83 and 84 of the optical couplers in the direction indicated by the arrow. Note that to enhance the mixing effect, a mixing rod having the same refractive index as that of the optical fiber is preferably inserted between the optical fiber-connecting ends 83 and 84.

## Claims

1. An optical coupler (A) including a plurality of optical fibers adjoining one another (3) at one end (17) of the coupler and forming separate branches (4,5) at the other end (18) of the coupler, the coupler comprising a plurality N of coupler parts (6,7), each coupler part adjoining the other coupler part(s) by way of an abutting face or a pair of abutting faces (11) positioned about a longitudinal axis perpendicular to the one end (17) of the coupler and each pair of abutting faces meeting at an angle of 360°/N at that axis, each coupler part being constituted by a block (1,2) and an associated optical fiber inserted in an inclined optical fiber-retaining hole (12) in the block, one end of the hole emerging with chamfered edges (15) at the edge or corner of the block formed by the one end (17) and the adjacent abutting face or faces (11) of the coupler part, the fiber being plastically deformed by heat treatment at its end to be flush with the surfaces of the block adjacent the hole and to extend into the chamfer to retain the fiber in the block.

2. An optical coupler according to claim 1, wherein the optical fiber retained in the hole in the block is at an angle of 3 to 30° to the longitudinal axis.

3. A two-fiber optical coupler comprising light-receiving and light-transmitting elements (66,65) respectively arranged on the branch end faces of optical fibers (64,64) of an optical coupler according to claim 1 or claim 2.

4. A process for the preparation of an optical coupler according to claim 1, which comprises inserting an optical fiber into the inclined optical fiber-retaining hole (12) of a block (1) so that an end (51) of the optical fiber projects slightly from the end of the hole having chamfered edges (15), heat-treating the projecting end (51) of the optical fiber with a heated plate to plastically deform the projecting end of the fiber to be flush (52,53) with the surfaces (11,17) of the block adjacent the hole and into the chamfer (54) to retain the optical fiber in the block, and assembling a plurality N of such blocks to construct an optical coupler according to claim 1.

5. Apparatus (30) for use in the preparation of an optical coupler according to claim 1, which comprises a holder (32) for the block, a mirror-surface plate (33a) for heat treating the end of the optical fiber projecting slightly from the hole in the block and a heater (34a) for heating the mirror-surface plate, the heater, mirror-surface plate and block holder being arranged in sequence on a base (31) for relative sliding movement.

## Patentansprüche

1. Optischer Koppler (A) mit einer Anzahl von optischen Fasern, die miteinander (3) an einem Ende (17) des Kopplers verbunden sind und am anderen Ende (18) des Kopplers getrennte Zweige (4,5) bilden, welcher Koppler eine Anzahl (N) von Koppler-Teilen (6,7) umfaßt, von denen jedes Koppler-Teil an das oder die anderen Koppler-Teile mit Hilfe einer Anschlagfläche oder zwei Anschlagflächen (11) angrenzt, die um eine Längsachse angeordnet sind, die senkrecht zu dem einen Ende (17) des Kopplers verläuft, wobei jedes Paar der gegeneinander anliegenden Flächen einander unter einem Winkel von 360°/N an der Achse trifft, wobei jedes Koppler-Teil durch einen Block (1,2) und eine zugehörige optische Faser gebildet wird, die in eine geneigte, die optische Faser aufnehmende Bohrung (12) in dem Block eingefügt ist, wobei ein Ende der Bohrung mit abgeschrägten Rändern (15) an der Ecke des Blockes austritt, die zwischen dem einen Ende (17) und der angrenzenden Anschlagfläche oder Flächen (11) des Koppler-Teils liegt, welche Faser plastisch verformt wird durch Wärmebehandlung des Endes, das mit der Oberfläche des Blockes angrenzend an die Bohrung fluchtet und sich in die Abschrägung erstreckt, so daß die Faser in dem Block festgehalten wird.

2. Optischer Koppler gemäß Anspruch 1, bei dem die durch die Bohrung in dem Block aufgenommene Faser unter einem Winkel von 3° bis 30° zur Längsachse gerichtet ist.

3. Optischer Koppler mit zwei Fasern, mit lichtaufnehmenden und lichtübertragenden Elementen (66,65), die an den Verzweigungs-Endflächen der optischen Fasern (64,64) des optischen Kopplers angeordnet sind, gemäß Anspruch 1 oder Anspruch 2.

4. Verfahren zur Herstellung eines optischen Kopplers gemäß Anspruch 1, welches umfaßt: Einfügen einer optischen Faser in die geneigte, die optische Faser aufnehmende Bohrung (12) eines Blockes, so daß ein Ende der optischen Faser leicht aus dem Ende der Bohrung, die abgeschrägte Ränder (15) aufweist, hinausragt, Wärmebehandlung des herausragenden Endes (51) der optischen Faser mit Hilfe einer geheizten Platte zur plastischen Verformung des herausragenden Endes der Faser, damit diese mit den Oberflächen (11,17) des Blockes angrenzend an die Bohrung und in der Abschrägung (54) fluchtet (52,53), so daß die optische Faser in dem Block gehalten wird, und Zusammenfügen einer Anzahl (N) von derartigen Blöcken zur Bildung eines optischen Kopplers gemäß der Erfindung.

5. Vorrichtung (30) zur Verwendung bei der Herstellung eines optischen Kopplers gemäß Anspruch 1, mit einem Halter (32) für den Block, einer Platte (33a) mit Spiegeloberfläche zur Wärmebehandlung des Endes der optischen Faser, die leicht aus der Bohrung in dem Block hinausragt, und einer Heizeinrichtung (34a) zum Heizen der Platte mit Spiegeloberfläche, welche Heizeinrichtung, Spiegel-Platte und Block-Halter in Reihe auf einer Basis (31) relativ verschiebbar angeordnet sind.

**Revendications**

1. Coupleur optique (A) comprenant une pluralité de fibres optiques contiguës les unes aux autres (3) à une première extrémité (17) du coupleur et formant des branches séparées (4, 5) à l'autre extrémité (18) du coupleur, le coupleur comprenant une pluralité N d'éléments de coupleur (6, 7), chaque élément de coupleur étant contigu à l'autre ou aux autres éléments au moyen d'une face de mise en contact ou de deux faces de mise en contact (11) positionnées autour d'un axe longitudinal perpendiculaire à la première extrémité (17) du coupleur et chaque paire de faces de mise en contact se rencontrant sous un angle de 360°/N par rapport à cet axe, chaque élément de coupleur étant constitué par un bloc (1, 2) et une fibre optique associée insérée dans un trou incliné de maintien de fibre optique (12) dans le bloc, une extrémité du bloc dépassant avec des bords chanfreinés (15) au bord ou au coin du bloc formé par l'une des extrémités (17) et la ou les faces de mise en contact contiguës (11) de la partie de coupleur, la fibre étant déformée plastiquement par traitement thermique à son extrémité afin d'être de niveau avec les surfaces du bloc contiguës au trou et de pénétrer dans le chanfrein pour maintenir la fibre dans le bloc.

2. Coupleur optique selon la revendication 1, dans lequel la fibre optique maintenue dans le trou dans le bloc est disposée à un angle de 3 à 30° par rapport à l'axe longitudinal.

3. Coupleur optique pour deux fibres comprenant des éléments de réception et d'émission de lumière (66, 65) agencés respectivement sur les faces d'extrémité de dérivation de fibres optiques (64, 65) d'un coupleur optique selon la revendication 1 ou 2.

4. Procédé pour la préparation d'un coupleur optique selon la revendication 1, comprenant l'insertion d'une fibre optique dans le trou incliné pour le maintien de fibre optique (12) d'un bloc (1) de sorte qu'une extrémité (51) de la fibre optique dépasse légèrement de l'extrémité du trou ayant des bords chanfreinés (15), le traitement thermique de l'extrémité en saillie (51) de la fibre optique au moyen d'une plaque chauffée afin de déformer plastiquement l'extrémité en saillie de la fibre pour qu'elle soit de niveau (52, 53) avec les surfaces (11, 17) du bloc contiguës au trou et pénètre dans le chanfrein (54) afin de maintenir la fibre optique dans le bloc, et l'assemblage d'une pluralité N de tels blocs pour constituer un coupleur optique selon la revendication 1.

5. Appareil (30) pour utilisation dans la préparation d'un coupleur optique selon la revendication 1, comprenant un support (32) pour le bloc, une plaque à surface polie (33a) pour le traitement thermique de l'extrémité de la fibre optique dépassant légèrement du trou dans le bloc et un dispositif de chauffage (34a) pour chauffer la plaque à surface polie, le dispositif de chauffage, la plaque à surface polie et le support de bloc étant disposés successivement sur un socle (31) de manière à pouvoir coulisser les uns par rapport aux autres.

# Fig. I(a)

# Fig. I (b)

# Fig. 2

# Fig. 3

30

34
34a
36d
33a
33
32
32a
36b
35b
36c
31
35a
36a
31a

*Fig. 4 (a)*

*Fig. 4 (b)*

*Fig. 4 (c)*

# Fig. 5(a)

# Fig. 5(b)

# Fig. 6

*Fig. 7*

*Fig. 8*

*Fig. 9*

# Fig. 10